# EUROPEAN PATENT SPECIFICATION

(11) **EP 4 154 517 B1**
(45) Date of publication and mention of the grant of the patent: **13.11.2024**
(21) Application number: 21733536.3
(22) Date of filing: 18.05.2021
(51) Int. Cl.: H04N 25/571, H04N 25/709, H04N 25/77, H04N 25/779

(54) **MULTIDYNAMICS VISION SENSOR**
MULTIDYNAMISCHER BILDDETEKTOR
CAPTEUR D'IMAGES MULTIDYNAMIQUE

(30) Priority: 18.05.2020 IT 202000011380
(43) Date of publication of application: 29.03.2023
(73) Proprietor: Eye-Tech S.r.l., 38027 Malè (TN) (IT)
(72) Inventor: CALEO, Alessandro, 38027 Malè (TN) (IT); VATTERONI, Monica, 38027 Malè (TN) (IT); TECCHIOLLI, Giampietro, 38027 Malè (TN) (IT)
(74) Representative: Leotta, Antonio
(86) International application number: PCT/IB2021/054268
(87) International publication number: WO 2021/234566

(56) References cited:
- US-A1- 2002 043 610
- US-A1- 2002 043 610
- US-A1- 2005 167 602
- US-A1- 2005 167 602
- US-A1- 2007 216 789
- US-A1- 2007 216 789
- US-A1- 2017 251 151
- US-A1- 2017 251 151

## Description

### TECHNICAL FIELD

The present invention relates to a digital image acquisition device of the type comprising at least a plurality of photosensitive elements, or pixels, each provided with at least one reset, selection and reading terminal to respectively allow the reset and control of the discharge of the photosensor, the selection of the pixel to enable reading and the reading thereof, and control and selection elements which allow selecting the photosensitive elements individually or in subgroups and controlling the discharge thereof, in which said control elements are connected to the photosensitive elements.

The image acquisition device according to the invention ensures a high quality of images in the presence of scenes with low brightness, high brightness, and with a light intensity variable in a wide range passing from very low to very high light intensity.

### BACKGROUND ART

Electro-optical sensors are known comprising a plurality of photodetector devices adapted to detect light signals by means of a photosensitive element and to transmit them, in the form of electrical signals, to a computing unit which processes them, obtaining images. Such images are then transmitted to storage or display devices which allow a user to view such images or information derived therefrom, even over time.

These electro-optical sensors are generally based on CMOS-type (Complementary Metal Oxide Semiconductor) silicon technology, and are adapted to detect scenes with a fixed and normally limited brightness range, by means of a linear transformation of the information conveyed by the incident light into an electrical signal (linear response sensors). The light information is acquired during a time interval, called integration or exposure time. During such time, the photosensitive element, comparable to a capacitor, discharges more or less quickly depending on the amount of incident light until the time interval defined for the integration ends, a condition in which an electrical signal is output from the photosensitive element which corresponds to the incident light, or to the state corresponding to the complete discharge of the photosensitive element, a condition defined saturation, and which means that the photosensitive element is no longer able to map the light information. Typically, once the integration step is completed, next there is the reading of an entire matrix of photosensitive elements and which corresponds to the image of the scene shot.

Such sensors are normally able to offer high image quality even under highly diversified lighting conditions within the same scene, exploiting different conversion techniques and mapping the light information in a more than linear manner into a corresponding electrical signal. Such techniques, which aim to extend the range of light intensity manageable by the photosensitive element before it reaches the saturation level, are defined as high light dynamics.

Among the most common techniques, it is known that the range of lights detectable by a sensor by means of a logarithmic compression of the signal within the photosensitive element can be increased. Solutions are known in which the compression is achieved by connecting a CMOS-type transistor in diode configuration to the photosensitive junction, as described for example in US 5608204. Such state-of-the-art solutions, while significantly extending the range of light intensity manageable by the photosensitive element, produce low quality images due to the mapping of a high light range within a limited voltage range with respect to that which is typical of linear sensors combined with the inability to accurately distinguish the different voltage levels into which the light information is mapped, especially in case of very intense light. Furthermore, the known techniques are characterized by an intrinsic slowness of the photosensitive elements with respect to rapid changes in light intensity in poorly lit scenes, causing artefacts in the presence of moving objects.

A technique exploiting the emission of subsequent reset pulses is known from US 2005/167602 A1. In this, different reset voltages can be applied to the pixels at different times. From a structural point of view, the above technique can be implemented by using buffered switches.

US 2017/251151 A1 also discloses a reset pulse technique similar to the previous one. The architecture of the system disclosed includes the presence of a block which generates signals for PRST, RST and TX to apply reset pulses.

US 2002/043610 A1 discloses another solution similar to the previous ones in which the propagation of the reset signal is not specified.

The technique of acquiring multiple linear images to obtain information in different brightness ranges is also known and widespread, which are then combined to obtain a single image which contains the information deriving from the different images and thus obtaining images with high light dynamics. Such a technique, as appropriate, is implemented both through the aid of software tools and directly on physical substrates, typically silicon, which integrate, in addition to the photosensitive element, also the electronics necessary to implement the control system and generate the images deriving from the combination of the acquired images.

Such techniques suffer from a high complexity resulting from the large amount of information to be processed and/or the electronics necessary to implement such solutions. Furthermore, by combining multiple images obtained in succession, it is highly likely to have image artefacts caused by the different position of objects moving over time.

Most of the limitations of these techniques have been overcome with the solution proposed in the previous patents EP 2761657 and EP 1874699 of the same applicant, which present techniques for acquiring high dynamic images based on the control of the discharge of the photosensitive element, appropriately piloting the reset signal of the photosensitive element itself and accordingly modelling the electrical signal which maps the power of the incident light.

The advantages of this technique are the high flexibility in programming the output light dynamics, both in amplitude and shape, based on the reset control signal and, consequently, the possibility of optimizing the response in terms of dynamics and resolution in the desired light range, rather than increasing the compression thereof and obtaining very high dynamic images. All the above with the acquisition of a single image, and thus avoiding artefacts, limiting processing complexity and obtaining high quality in any light condition.

The limitation of the technique presented in the aforementioned patents is the ability to obtain high dynamic images only in the case of controlled light. This is because a single reset curve is generated and distributed simultaneously to the entire matrix of photosensitive elements and it is therefore necessary to interrupt the luminous flux affecting the pixels to stop the discharge process during the reading step. It is clear that this constraint limits the scope of the above-mentioned technology to those situations where it is possible to control the lighting conditions of the scene.

The possibility is also known of controlling the exposure time of each photosensitive element individually so as to avoid saturation at the end of the light exposure period. An implementation example of this technique is disclosed in US 6975355 and includes integrating into each photosensitive element a flip-flop and an AND-type port to locally control the onset instant of the integration time and exposure. However, this technique includes the acquisition of a linear signal and, consequently, even if the different photosensitive elements will work with different acquisition intervals and therefore on different dynamics, each photosensitive element will individually have linear dynamics and therefore low dynamics when compared to the aforementioned cases.

The advantage is also known in the state of the art of being able to define areas within the same image which are subject to different integration times in order to maximize the informative content within the image, locally maximizing the contrast of the image. Such techniques are generally used to solve the problem of displaying high dynamic images on 8-bit monitors which only have 256 grey values to map information content which, to be properly expressed, would need 10-12-bit monitors.

Various techniques are known in the state of the art to implement such a function. For example, a publicly available application, called HDRView, allows the user to open a high dynamic image and locally vary the exposure by selecting a certain area of the image. A similar technique is also presented in US 7492375. However, all the techniques known in the state of the art have the disadvantage of requiring operator intervention and being implemented entirely in software with the consequent need for a large computational load and a large memory to maintain all the information necessary to enable such a function.

Another technique for solving the problem of displaying high dynamic images is the use of high dynamic light monitors, called HDR monitors, which allow a much wider number of grey levels (10-12-bit) than traditional monitors to be displayed.

It is important to underline that maximizing information within the scene is critical especially for image processing techniques which have the primary objective of extracting information from the scene and not displaying the images themselves. For these techniques, the informative content of the image is much more important than the image quality itself.

In this regard, neuromorphic vision sensors are known in the state of the art which boast of operating like the human eye because they do not detect the image itself but the events occurring in the scene. These sensors are based on high dynamic image acquisition with logarithmic technique and have the advantage of producing a much smaller volume of data when dealing with complete and detailed images, but have the inherent disadvantage of containing less information, demonstrating less versatility with respect to different application fields.

### SUMMARY OF THE INVENTION

An object of the present invention is to provide an electro-optical device which can be integrated into a support element, or substrate, suitable to realize small electronic circuits, for example of silicon, and which is suitable for providing good quality images at a high repetition frequency both in the case of low brightness and in the presence of a wide range of brightnesses present in the observed scene.

A specific object is to realize an electro-optical device which is capable of operating both in controlled and non-controlled light conditions, allowing to adapt the response dynamics of the sensor both to lighting conditions and to the needs of the user and/or the application.

A further object of the present invention is to realize an electro-optical sensor which comprises a plurality of photosensitive elements arranged according to a matrix, or in another desired arrangement, and which allows to independently manage the reset state even of a single photosensitive element, or of a desired subset, variable in size and shape, going to control the discharge of the photosensitive elements individually or in subgroups.

In order to overcome the drawbacks of the known art and to achieve these and further objects and advantages, the invention outlined below has been studied, tested and implemented.

The present invention is defined by claim 1. The dependent claims show other features of the present invention or variants of the main solution idea.

In accordance with the aforementioned objects, an electro-optical image acquisition device comprises: a plurality of light-sensing sub-blocks (20), each comprising at least one photosensitive element (80) which comprises a photodetector element for the conversion of light information into an electrical signal and electronic media controllable by reset signals and capable of resetting the relevant photodetector; a detected signal reading block for reading the output signal from the photosensitive elements; row and column selection elements, which enable access to different photosensitive elements of the matrix and their reading by means of the aforementioned detected signal reading block; and pixel discharge control circuitry.

According to a characteristic aspect of the present invention, the pixel discharge control circuits are configured so as to combine a plurality of input voltage signals, to generate one or more reset curves which are transported to the photosensitive elements by means of reset curve distribution lines. Said pixel discharge control circuits are configured to generate a plurality of reset curves and to dynamically select, for each photosensitive element, an appropriate reset curve among those available transported by said reset curve distribution lines while storing such a selection until the next selection.

The system outlined above, rather than using reset pulses as occurs in the closest known technique, previously mentioned, is based on the creation of real reset curves. From a structural perspective, the technique is implemented by means of a multiplexer which allows to pass on the same line from one voltage to another.

Advantageously, the pixel discharge control circuits comprise reset curve generation elements configured to allow the selective propagation in succession of the various line-by-line reset curves over time, so as to ensure a high dynamic response even in the event of operation with uncontrolled light.

When the pixel discharge control circuits are configured to generate a plurality of reset curves, the device outlined above allows to obtain zones of the matrix of photosensitive elements with different light dynamics within the scene itself and to obtain so-called "multidynamic" images. This allows to both optimize the quality of the image by enabling an overall dynamic response which can even exceed the dynamics of the individual photosensitive elements and to enable schemes which allow to maximize the information content if the image is subsequently processed by a computer.

In fact, the proposed technique allows to obtain images with a higher number of bits than the native number of the electro-optical sensor by virtue of the application of one or more flags which identify the associated dynamics within the information extracted from each photosensitive element. Such information is used during the reconstruction of the image to increase the contrast of the image as a whole. The image thus constructed can then be displayed on HDR monitors or exploited with image processing techniques to optimize the information processing and extraction processes. By way of example, for a better understanding of the concept, we can make the following example: if two subsections of the image have a depth of 8 bits but in two different light ranges or with one having reduced dynamics compared to the other, they can be recombined into a single image with a depth of 10-12 bits, exploiting the information linked to the reset curve, encoded with additional bits, which has been associated with the different photosensitive elements.

Furthermore, the disclosed circuit has the following advantages with respect to the prior art:
- It has the ability to detect light, or light radiation, in a range of intensity varying according to needs, up to over 120 dB, within a single scene, or image, in any image acquisition condition, even in uncontrolled light conditions, such as in the presence of ambient light;
- It ensures piloting flexibility similar to that of a traditional linear dynamic sensor;
- It provides good image quality even in the case of low input brightness and therefore low current generated by the aforementioned photosensitive element;
- It allows to analyse zones with different brightnesses of the scene, or of the image, with programmable precision for each photosensitive element or a subset of photosensitive elements;
- It has the ability to be configured, without interrupting the generated image stream, so as to respond to changes required by any circuits or devices in real time, even based on computer devices or computational blocks, capable of modifying their dynamic response to light based on the current/real conditions of the observed scene in order to optimize the content of information required by the specific application in which the electro-optical device is used.

### BRIEF DESCRIPTION OF THE DRAWINGS

These and other advantages and features associated with the device of the present invention will moreover be easier to understand by means of the illustration of non-limiting embodiments, as described below with the aid of the attached drawings, in which:
- Fig. 1 shows a perspective view of a digital image acquisition device according to the present invention;
- Fig. 2 shows a second configuration of a digital image acquisition device according to the present invention;
- Figures 3a and 3b show the electrical diagrams of two possible embodiments of a photosensitive element in a device according to the invention;
- Fig. 4 shows an embodiment of a device according to the invention in which a subset of photosensitive elements share the same reset curve selection and storage circuit;
- Fig. 5 shows the electrical diagram of a possible embodiment of a component of the device of the invention, in particular elements for generating the response curve of the photosensitive element starting from the primary voltages generated by means of Digital/Analog Converters (DACs);
- Fig. 6 shows the electrical diagram of the pixel reset curve generation elements starting from the primary voltages generated by means of Digital/Analog Converters (DACs);
- Fig. 7 shows a possible shape of the reset curve of the photosensitive element with relative signals which generate it (RowRES1 and RowRES2);
- Fig. 8 shows another possible shape of the reset curve of the photosensitive element with relative signals which generate it (RowRES1 and RowRES2);
- Fig. 9 shows a possible shape of the reset curve, the signals which generate it and the propagation thereof along the matrix over time.

### DESCRIPTION OF THE PREFERRED EMBODIMENTS

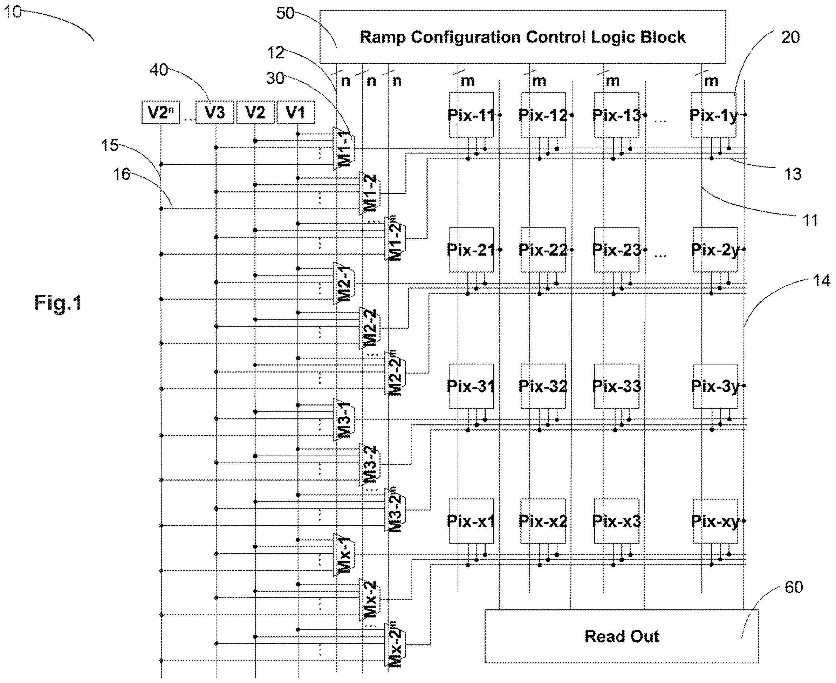

With reference to Fig. 1, an electro-optical device for the acquisition of digital images 10 according to the present invention comprises: a plurality of light-sensing sub-blocks, 20, arranged in rows and columns to form a matrix structure, which could have any geometry, even linear; elements for generating a reset curve, 30, capable of appropriately combining input voltage signals, 40, available and transported along the entire matrix, so as to generate appropriate reset curves transported by means of reset curve distribution lines 13 to the light-sensing sub-blocks 20. By way of example, such input voltage signals 40 can be constants, such as mass, power or other intermediate values generated inside or outside the electro-optical device, or be programmable voltages, such as those generated by digital-analog converters, called DACs. The various input voltage signals 40 are brought to the various reset curve generation elements 30 by means of matrix-level voltage signal transport lines 15, and row-level voltage signal transport lines 16. In particular, in the exemplary embodiments depicted and described, the reset curve generation elements 30 act as selectors in that they select, from time to time, one of the input voltage signals 40; however, they can be suitable to perform a combination or alteration of said input voltage signals 40 to generate an appropriate reset curve.

The device 10 further comprises a control block 50 adapted to generate an appropriate sequence of signals useful to the reset curve generation elements 30 and the light-sensing sub-blocks 20 for generating and propagating the reset voltage within the device in an appropriate manner. The aforementioned signals are transmitted from the control block 50 to the reset curve generation elements 30, and to the light-sensing sub-blocks 20, by means of lines of the reset curve generation control signal 12 (hereinafter also referred to simply as control signal lines), and lines of the reset curve selection signal at the pixel level 11, respectively. In the example shown, the distribution of the reset curves occurs, by means of the reset curve distribution lines 13, per row, but this is only one implementation example. In fact, it can occur by column or other configuration without thereby departing from the objects of the present invention. For the sake of simplicity, row and column selection elements are not depicted in the figure because they are known to the state of the art, but are present in that they are necessary for the operation of the device; they enable access to the different photosensitive elements of the matrix and the reading thereof by means of a detected signal reading block 60, whose implementation mode is also known in the state of the art. The various light-sensing sub-blocks 20 are connected to the detected signal reading block 60 by means of detected signal reading lines 14.

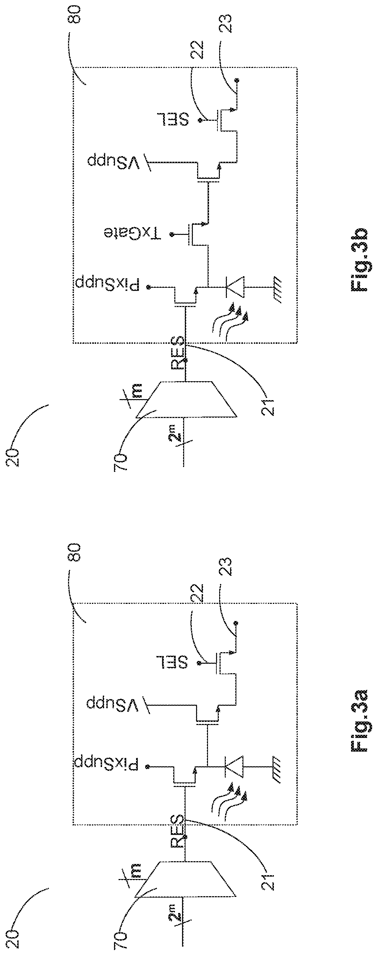

The circuits shown in Fig.3a and Fig.3b depict a light-sensing sub-block 20 (indicated with the same reference numeral because the relevant elements for the purposes of the present disclosure are common to both embodiments). Each sub-block 20 includes a reset curve selection circuit 70, and a photosensitive element 80, or pixel. The photosensitive element 80 has at least one reset terminal 21, one selection terminal 22 and one reading terminal 23. The reset terminal 21 is connected to the reset curve selection circuit 70.

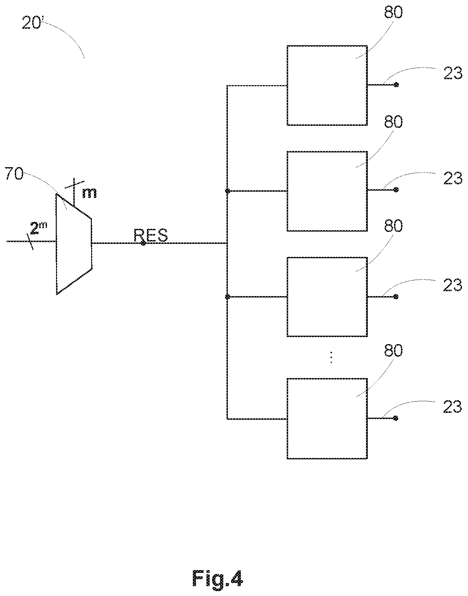

With reference to Fig. 4, a light-sensing sub-block 20', includes a reset curve selection circuit 70, to which a plurality of photosensitive elements 80 are connected. Within the sub-block 20', the individual photosensitive elements 80 can then be directed independently or in groups for reading the relevant output signal 23.

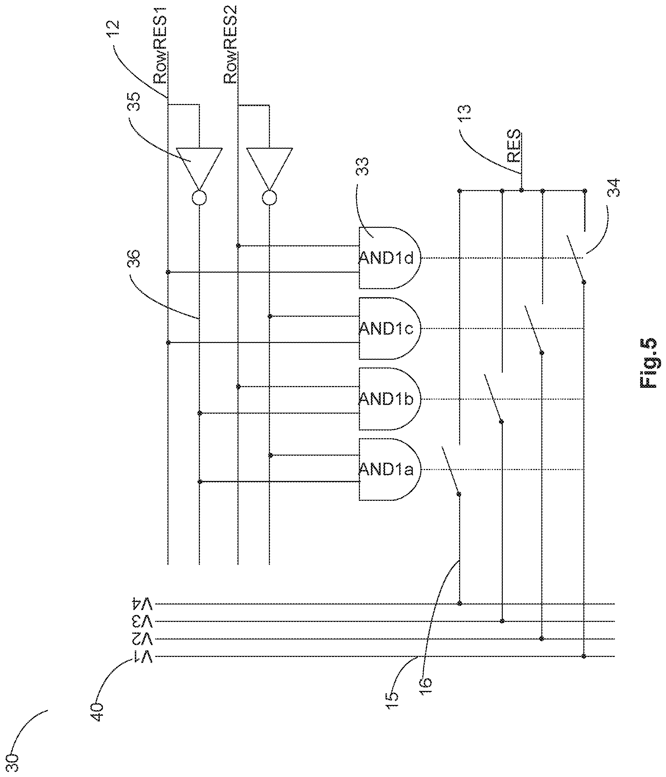

With reference to Fig.5, a reset curve generation element 30 in the device 10 according to the invention comprises:
- AND ports 33, which pilot switches 34 present on the voltage signal transport lines at line level 16 and which exclusively connect the input voltage signals 40 to the distribution line of the reset curve 13 exiting from the reset curve generation element 30;
- NOT ports 35, which generate the negated signal 36 of the signal control lines 12, so that the signal of the signal control lines 12 and the related negated signal 36 constitute the input of the AND ports 33.

The circuits adapted to realize the AND 33, and NOT 35 logic ports are of purely digital type, as well as the switches 34 and can advantageously be implemented in CMOS technology as known in the state of the art.

With this structure it is possible to create, by means of an appropriate combination of the input voltage signals 40, several reset curves which are distributed from the relative distribution line of the reset curves 13, which develop over time and allow the discharge of the photosensitive elements 80 to be appropriately controlled. The advantage of transporting the different voltage signals 40 along the entire electro-optical device 10 and not generating them locally per row or subset of photosensitive elements lies in the fact that the voltage used will be exactly the same for all rows while, for example, a digital/analog conversion at the row/sub-block level would lead to image artefacts due to the voltage generation tolerance with respect to that actually desired, as is known in the state of the art. This advantage is also maintained in the variant where a single reset curve is generated and transported along the entire matrix.

The reset curve generation element 30 shown in Fig.5 is an example which allows the management of four input voltage signals 40, indicated with V1, V2, V3 and V4, and directed by the control signals, RowRES1 and RowRES2, corresponding to two lines of the control signal 12, but can be easily extended to a variant of 2ⁿ input voltage signals 40, and n lines of the control signal 12. In such a case, 2ⁿ AND ports 33, n NOT ports 35, and 2ⁿ switches 34 will be required. The structure presented in Fig.5 allows to bring the reset curve to all the photosensitive elements of the matrix at the same time and therefore continues to ensure appropriate operation with controlled light.

In the device depicted in Fig. 1, the number of input voltage signals 40, constant or programmable, is 2ⁿ, with the number n defined at the implementation step, and consequently the number of lines of the control signal 12, for each reset curve generation element 30, is n to make all the voltages available at the input of the generation blocks 30 accessible. Similarly, the number of reset curves generated and propagated to the various photosensitive elements line by line by means of the reset curve distribution lines 13 is 2^{m}, as designed, and consequently the number of lines of the selection signal 11 which will go to each light-sensing sub-block 20 is m. In particular, when m is 0 (zero), it is part of the variant in which the generation and transport of a single reset curve to the entire matrix occurs. The structure composed of 2^{m} reset curve generation elements 30 is repeated row by row. It is evident that row propagation is only one variant, while other configurations are possible.

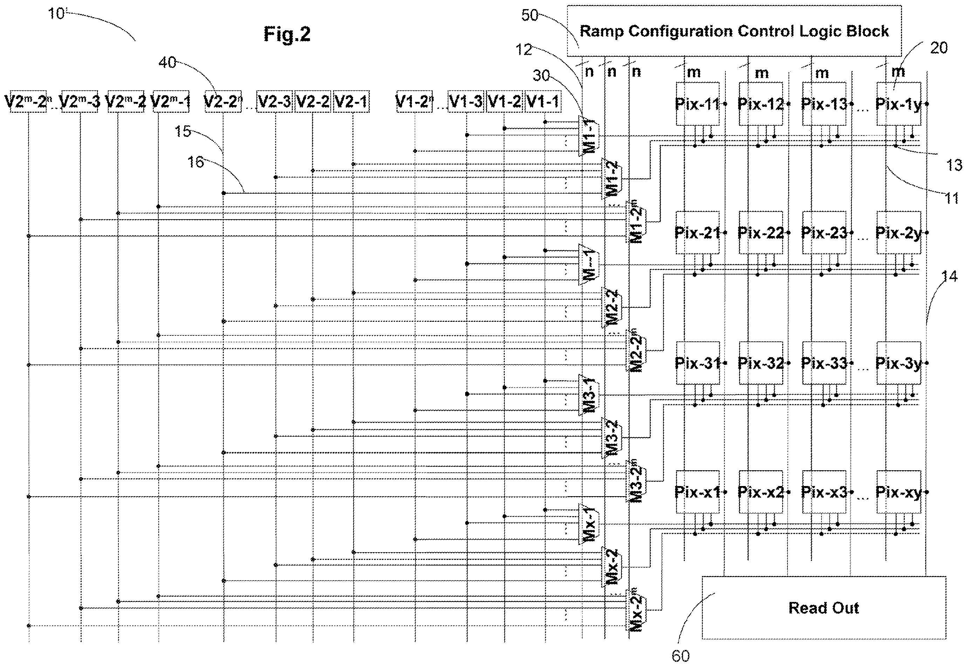

In a device 10' shown in Fig.2, a different group of input voltage signals 40 is associated with each reset curve generation element 30 of a row. The structure consisting of m reset curve generation elements 30 is repeated line by line and the various groups of input voltage signals 40 are similarly associated with the m reset curve generation elements 30 of each line.

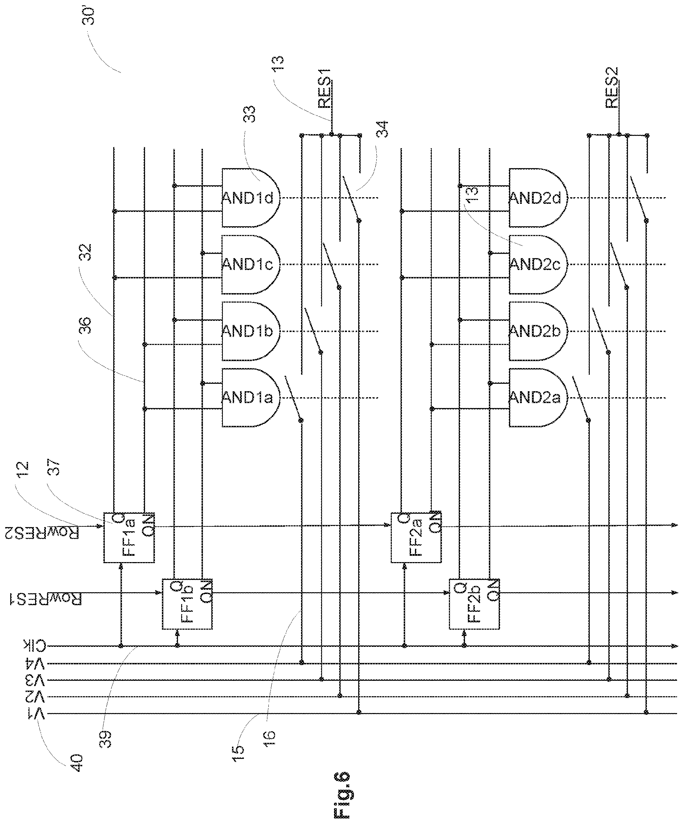

A variant of a reset curve generation element 30' is shown in Fig.6. This variant represents the next stage with respect to the variant of Fig.5. In fact, comparing the two variants, it can be seen that the input voltage signals 40 are still present, transported by means of the voltage signal transport lines 15 and 16, and the AND ports 33, which allow the combination of the signals 40, as well as the switches 34, which exclusively connect the signal transport lines 16 to two terminals, RES1 and RES2, connecting to respective reset curve distribution lines 13 exiting from the reset curve generation element 30. Unlike what occurs in the variant of Fig. 5, in this case the control signals of the AND ports 33 are generated by flip-flops, 37, and transported by the lines of the ports 32 and 36. Such flip-flops 37 are known in the state of the art and in the proposed implementation are repeated per row/sub-block, allowing, in addition to generating the negated signal, the sliding of a signature along the matrix of light-sensing sub-blocks 20 at each clock cycle 39, by means of control signals RowRES1 and RowRES2 transported by the control signal lines 12. Thereby, over time, there will be a delay of a clock cycle 39 in the signal configuration for each row/sub-block, thus realizing the sliding of a certain reset curve along the distribution lines 13, and therefore along the matrix of photosensitive elements 80. This enables the possibility of the sensor to work even in uncontrolled light and in the so-called rolling shutter condition.

As in the variant of Fig.5, that of Fig.6 also shows an example with four input voltage signals 40 (V1, V2, V3 and V4) and two control signal lines 12 (RowRES1 and RowRES2 signals) which allow the generation of a reset curve 13 for each row/sub-block, where in this case the number of rows/sub-blocks is equal to two. Obviously, the structure shown in Fig. 6 can also be readily extended and adapted to the embodiments of the device 10 and 10' of Fig. 1 and Fig. 2, respectively, in which 2ⁿ input voltage signals 40, n control signal lines 12 are present, and the entire reset curve generation element 30' will be replicated 2^{m} times so that generally 2^{m} reset curves will be distributed by as many reset curve distribution lines 13, and then selected at the level of each light-sensing sub-block 20, from the related reset curve selection circuit 70, by means of the m control signals transported by the selection signal lines 11.

In the variant where the reset curve generation element 30 is configured to generate a single reset curve for the entire matrix, the reset curve selection circuit 70 may not be present and the light-sensing sub-blocks 20 would then comprise only the photosensitive elements 80.

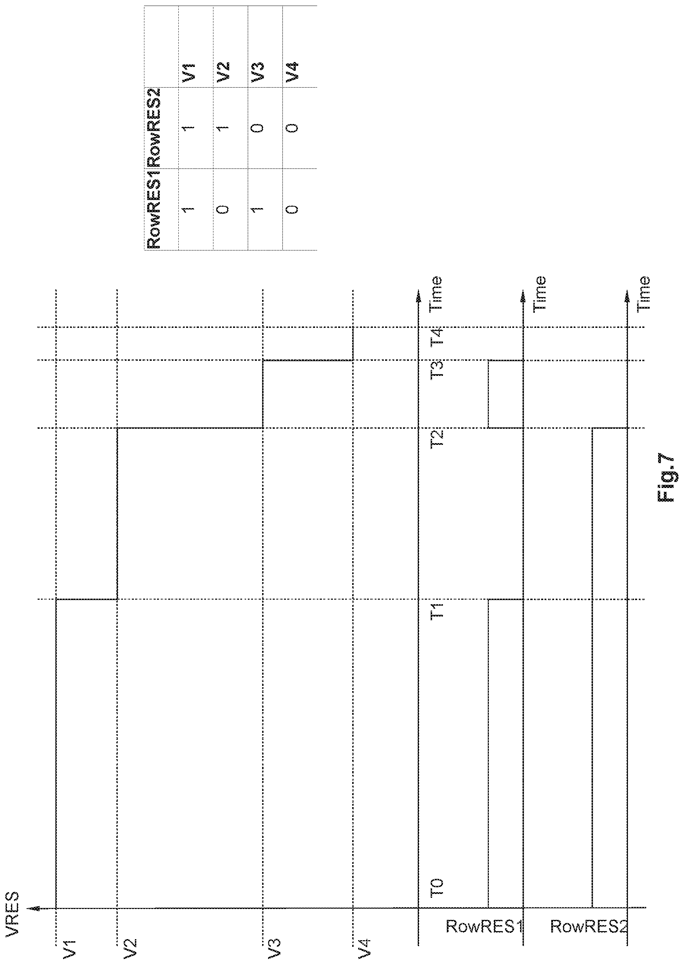

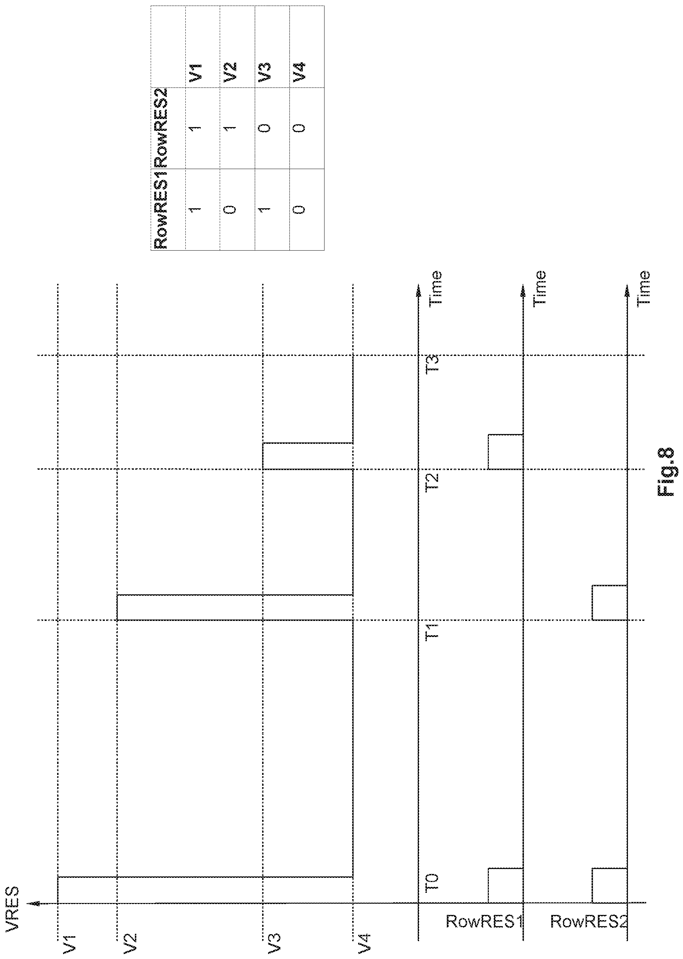

In the example of Fig.7, the reset curves generated on the reset curve distribution lines 13, starting from the input voltage signals 40, are stepped and decreasing, while those shown in Fig.8 are pulsed. Obviously, alternative forms can be applied. Fig.7 and Fig.8 use four input voltage signals 40, which correspond to fixed or programmable voltages available within the electro-optical device set at different time points, identified with T1, T2, T3 and T4. However, the example can be easily extended to 2ⁿ input voltage signals 40 enabled at different time points in a number not necessarily equal to the number of signals. In fact, the different voltage signals available may not all be used or be used multiple times.

Fig.7 and Fig.8 also show the control signals RowRES1 and RowRES2 transmitted by means of the control signal lines 12 and used for generating the reset curves shown in the graphs and the related conversion tables.

Advantageously, in a light-sensing sub-block 20, a selection circuit 70 has a structure similar to that of the reset curve generation element 30' shown in Fig.6, and this structure is used in the sub-block 20 to select the appropriate reset curve 13 from those transmitted by the reset curve distribution lines 13 associated with the sub-block 20 itself. Unlike the row-level structure, the sub-block-level structure 20 includes a memory element, such as a flip-flop, adapted to maintain the configuration which selects the appropriate reset curve for as long as necessary for the generation and acquisition of an image, i.e., for the integration and reading time, or a multiple thereof. The flip-flop structure facilitates matrix programming prior to the image generation and acquisition step by scrolling a programming signature along the different columns, or rows, or sub-blocks of different shapes. It should be noted that the clock 39 of Fig.6 will be different if such a configuration is used to select the appropriate reset curve at the sub-block level 20, i.e., in the selection circuit 70, with respect to what occurs in the reset curve generation element 30, 30'.

Furthermore, it is important to note that the structure shown in Fig. 6 is only one example of an implementation of the structure usable to implement the selection circuit 70. In fact, for example, it can be alternatively considered to combine any memory element in the selection circuit 70, the implementation of which is known in the state of the art in the different forms thereof, with a selection element of the single sub-block 20 implemented with a row and column decoder which allows the selection of the single sub-block 20 and the consequent programming thereof.

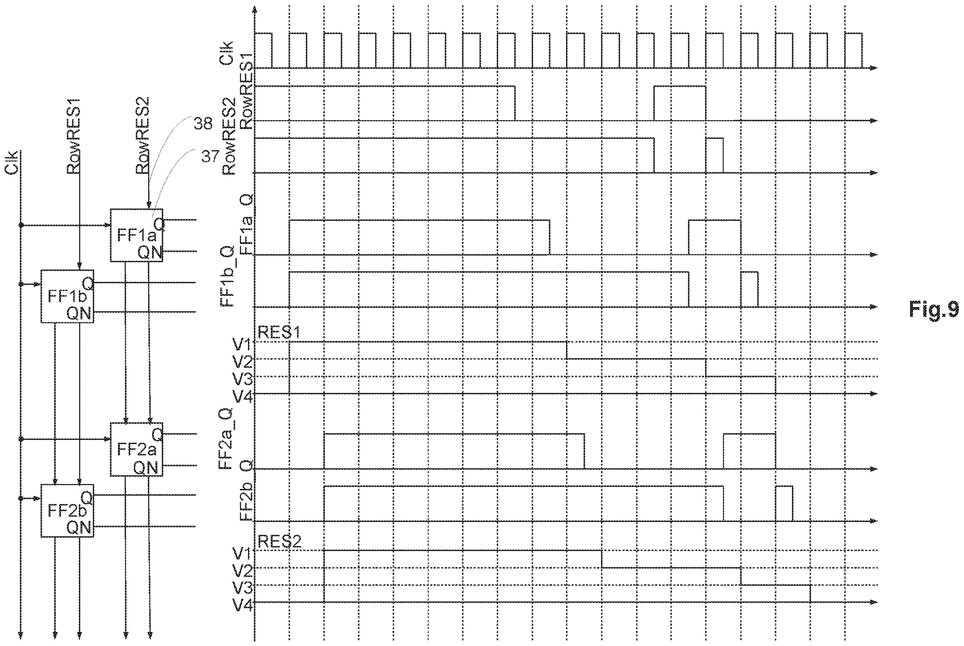

Finally, Fig. 9 shows an example of signal propagation along the lines, always referring to an example in which there are four input voltage signals 40, two control signal lines, 12, and two rows of sub-blocks for detecting light 20. Thereby, the generated reset curve will slide along the different rows/sub-blocks of the matrix.

As is apparent from the above description, an electro-optical image acquisition device according to the invention has several advantages with respect to the more common devices of the known art. Firstly, it allows to obtain dynamic images of variable light in any lighting condition, generating a response which can be adapted very precisely to lighting conditions and operator needs. Furthermore, different areas of the matrix of photosensitive elements can be programmed with different light dynamics so as to maximize the information contained in the final image, rather than the information available to the operator and/or the computer to extract useful information. It should be noted that the capillarity of the matrix programming can reach, depending on the implementation choices, even the single pixel or be managed by sub-blocks.

The advantages highlighted above remain substantially unchanged also in the presence of further variants. For example, as will be readily understandable, a light-sensing sub-block 20, consisting of a selection circuit, 70, and a plurality of photosensitive elements 80 associated therewith could comprise not all of the photosensitive elements 80 of a row but any number of pixels 80 with any arrangement in the matrix; and the device 10 could comprise a plurality of light-sensing sub-blocks 20, not identical to each other, i.e., composed of different numbers of pixels 80.

The advantages highlighted above of the device of the invention remain obviously protected even in the presence of further variants and modifications which a person skilled in the art will be able to make without the need for any inventive contribution, remaining within the scope of the following claims.

## Claims

1. Electro-optical image acquisition device (10) including:
- a plurality of light-sensing sub-blocks (20), each comprising at least one photosensitive element (80) which includes a photodetector element for the conversion of light information into an electrical signal and electronic media controllable by reset signals and capable of resetting the relevant photodetector;
- a detected signal reading block (60) aimed at reading the output signal from said photosensitive elements (80);
- row and column selection elements, which enable access to different photosensitive elements (80) of the device and their reading by means of said detected signal reading block (60); and
- pixel discharge control circuitry;
said pixel discharge control circuits are so configured as to combine a plurality of input voltage signals (40) to generate at least one reset curve, which is transported to one or more of said light-sensing sub-blocks (20) by at least ^{o}ne reset curve distribution line (13),
**characterized in that** said pixel discharge control circuits comprise:
- reset curve generation elements (30) designed to combine said input voltage signals (40) to generate a defined number of reset curves,
- at least one control block (50) suitable to generate an appropriate sequence of signals useful to the reset curve generation elements (30) to generate and propagate the reset curves inside the device (10) in an appropriate way;
each of said reset curve generation elements (30) comprising:
- AND ports (33) that pilot switches (34) present on the voltage signal transport lines (16) and that exclusively connect said input voltage signals (40) to a distribution line of the reset curve (13) exiting from said reset curve generation element (30);
- NOT ports (35) for generating negated signal (36) from the signal of the signal control lines (12), so that the signal of the signal control lines (12) and the related negated signal (36) constitute the input of said AND ports (33).

2. Electro-optical image acquisition device (10) according to claim 1 **characterized in that** said pixel discharge control circuits are designed to generate a plurality of reset curves and to dynamically select, for each of said light-sensing sub-blocks (20), an appropriate reset curve among those available transported by said distribution lines of the reset curves (13) while storing such selection until the next selection.

3. Electro-optical device according to claim 2 **characterized in that** at least one of said light-sensing sub-blocks (20) comprises a reset curve selection circuit (70) associated with a plurality of photosensitive elements (80).

4. Electro-optical image acquisition device (10) according to claim 2 **characterized in that** said pixel discharge control circuits comprise:
- reset curve selection circuits (70), each one associated with at least one of the said photosensitive elements (80) so as to form a light-sensing sub-block (20), said reset curve selection circuits (70) being configured to select, among a plurality of reset curves received through a corresponding plurality of reset curve distribution lines (13), a suitable reset curve among those available carried by said reset curve distribution lines (13) while storing such selection until subsequent selection;
- at least one control block (50) suitable to generate an appropriate sequence of signals useful to the reset curve generation elements (30) to select a suitable reset curve among those available carried by said reset curve distribution lines (13).

5. Electro-optical image acquisition device (10) according to claim 1 **characterized in that** said pixel discharge control circuitry include elements for generation of the reset curves (30') designed to the selective propagation in succession of various reset curves line by line as time goes by, so as to guarantee a high dynamic response even in case of uncontrolled light operation.

6. Electro-optical image acquisition device (10) according to claim 1 **characterized in that** each of said generation elements for generating the reset curves (30') includes flip-flops (37) designed to receive control signals carried by said signal control lines (12) and a clock signal (39) to generate control signals of said AND ports (33), so as to allow, in addition to the generation of the negated signal, the scrolling of a signature along the light-sensing sub-blocks (20) at each clock cycle (39).

7. Electro-optical image acquisition device (10) according to the pervious claim **characterized in that** each of said selection circuits for selecting the reset curve (70) has a structure analogous to that of said generation elements for generation of the reset curves (30'), with such structure being used in the relative light sensitive sub-block (20) to select the appropriate reset curve among those transmitted by said reset curve distribution lines (13) associated to the sub-block (20) itself, said reset curve selection circuit (70) including a memory element suitable to maintain the configuration that selects the appropriate reset curve for all the time necessary for the generation and acquisition of an image, that is for the time of integration and reading, or a multiple thereof.

8. Electro-optical image acquisition device (10) according to claim 1 **characterized in that** said AND (33) and NOT (35) logic ports and said switches (34) are of purely digital type, in CMOS technology.

9. Electro-optical image acquisition device (10') according to claim 3 **characterized in that** said light-sensing sub-blocks (20) are arranged in rows and columns to form a matrix structure, with a different group of input voltage signals (40) being associated to each reset curve generation element (30) of a row, with a structure consisting of a plurality of reset curve generation elements (30) being repeated line by line and the various groups of input voltage signals (40) being similarly associated with the reset curve generation elements (30) of each line.

## Patentansprüche

1. Elektro-optische Bilderfassungsvorrichtung (10) die folgendes aufweist:
- eine Vielzahl von Lichtsensor-Unterblöcken (20), die jeweils mindestens ein lichtempfindliches Element (80) umfassen, das ein Fotodetektorelement zur Umwandlung von Lichtinformationen in ein elektrisches Signal und elektronische Medien enthält, die durch Rücksetzsignale steuerbar sind und den betreffenden Fotodetektor zurücksetzen können;
- einen Block (60) zum Lesen des detektierten Signals, der dazu dient, das Ausgangssignal von den lichtempfindlichen Elementen (80) zu lesen;
- Zeilen- und Spaltenauswahlelemente, die den Zugriff auf verschiedene lichtempfindliche Elemente (80) der Vorrichtung und deren Auslesen mittels des Blocks (60) zum Lesen des erfassten Signals ermöglichen; und
- Pixelentladungs-Steuerschaltungen;
wobei die Pixelentladungssteuerschaltungen so konfiguriert sind, dass sie eine Vielzahl von Eingangsspannungssignalen (40) kombinieren, um mindestens eine Rücksetzkurve zu erzeugen, die durch mindestens eine Rücksetzkurvenverteilungsleitung (13) zu einem oder mehreren der Lichtsensor-Unterblöcken (20) transportiert wird,
**dadurch gekennzeichnet, dass** die Pixelentladungs-Steuerschaltungen Folgendes umfassen:
- Rücksetzkurven-Erzeugungselemente (30), die dafür ausgelegt sind, die Eingangsspannungssignale (40) zu kombinieren, um eine definierte Anzahl von Rücksetzkurven zu erzeugen,
- mindestens einen Steuerblock (50), der geeignet ist, eine geeignete Folge von Signalen zu erzeugen, die für die Rücksetzkurven-Erzeugungselemente (30) nützlich sind, um die Rücksetzkurven innerhalb der Vorrichtung (10) auf geeignete Weise zu erzeugen und weiterzuleiten;
wobei jedes der Rücksetzkurven-Erzeugungselemente (30) Folgendes umfasst:
- AND-Ports (33), die Schalter (34) steuern, die auf den Spannungssignaltransportleitungen (16) vorhanden sind, und die ausschließlich die Eingangsspannungssignale (40) mit einer Verteilungsleitung der Rückstellkurve (13) verbinden, die von dem Rückstellkurven-Erzeugungselement (30) ausgeht:
- NOT-Ports (35) zur Erzeugung eines negierten Signals (36) aus dem Signal der Signalsteuerleitungen (12), so dass das Signal der Signalsteuerleitungen (12) und das zugehörige negierte Signal (36) den Eingang der AND-Ports (33) bilden.

2. Elektro-optische Bilderfassungsvorrichtung (10) nach Anspruch 1, **dadurch gekennzeichnet, dass** die Pixelentladungs-Steuerschaltungen so ausgelegt sind, dass sie eine Vielzahl von Rücksetzkurven erzeugen und für jeden der Lichtsensor-Unterblöcken (20) dynamisch eine geeignete Rücksetzkurve unter den verfügbaren auswählen, die von den Verteilungsleitungen der Rücksetzkurven (13) transportiert werden, während sie diese Auswahl bis zur nächsten Auswahl speichern.

3. Elektro-optische Vorrichtung nach Anspruch 2, **dadurch gekennzeichnet, dass** mindestens einer der Lichtsensor-Unterblöcken (20) eine Rückstellkurven-Auswahlschaltung (70) umfasst, die mit einer Vielzahl von lichtempfindlichen Elementen (80) verbunden ist.

4. Elektro-optische Bilderfassungsvorrichtung (10) nach Anspruch 2, **dadurch gekennzeichnet, dass** die Pixelentladungs-Steuerschaltungen Folgendes umfassen:
- Rücksetzkurven-Auswahlschaltungen (70), die jeweils mindestens einem der lichtempfindlichen Elemente (80) zugeordnet sind, um einen Lichterfassungs-Unterblock (20) zu bilden, wobei die Rücksetzkurven-Auswahlschaltungen (70) so konfiguriert sind, dass sie aus einer Vielzahl von Rücksetzkurven, die über eine entsprechende Vielzahl von Rücksetzkurven-Verteilungsleitungen (13) empfangen werden, eine geeignete Rücksetzkurve unter denjenigen auswählen, die über die Rücksetzkurven-Verteilungsleitungen (13) verfügbar sind, und diese Auswahl bis zu einer späteren Auswahl speichern;
- mindestens einen Steuerblock (50), der geeignet ist, eine geeignete Folge von Signalen zu erzeugen, die für die Rückstellkurven-Erzeugungselemente (30) nützlich sind, um eine geeignete Rückstellkurve unter denjenigen auszuwählen, die durch die Rückstellkurven-Verteilungsleitungen (13) übertragen werden.

5. Elektro-optische Bilderfassungsvorrichtung (10) nach Anspruch 1, **dadurch gekennzeichnet, dass** die Steuerschaltung für die Pixelentladung Elemente für die Erzeugung der Rückstellkurven (30') enthält, die für die selektive Ausbreitung verschiedener Rückstellkurven Zeile für Zeile im Laufe der Zeit ausgelegt sind, um eine hohe Dynamik auch im Falle eines unkontrollierten Lichtbetriebs zu gewährleisten.

6. Elektro-optische Bilderfassungsvorrichtung (10) nach Anspruch 1, **dadurch gekennzeichnet, dass** jedes der Erzeugungselemente zur Erzeugung der Rücksetzkurven (30') Flip-Flops (37) umfasst, die so ausgelegt sind, dass sie Steuersignale, die von den Signalsteuerleitungen (12) übertragen werden, und ein Taktsignal (39) empfangen, um Steuersignale der AND-Ports (33) zu erzeugen, so dass zusätzlich zur Erzeugung des negierten Signals bei jedem Taktzyklus (39) das Scrollen einer Signatur entlang der Lichtsensor-Unterblöcke (20) ermöglicht wird.

7. Elektro-optische Bilderfassungsvorrichtung (10) nach dem vorhergehenden Anspruch, **dadurch gekennzeichnet, dass** jede der Auswahlschaltungen zur Auswahl der Rücksetzkurve (70) eine Struktur analog zu derjenigen der Erzeugungselemente zur Erzeugung der Rücksetzkurven (30') aufweist, wobei eine solche Struktur in dem jeweiligen lichtempfindlichen Unterblock (20) verwendet wird, um die geeignete Rücksetzkurve unter denjenigen auszuwählen, die von den dem Unterblock (20) selbst zugeordneten Rücksetzkurven-Verteilungsleitungen (13) übertragen werden, wobei die Schaltung (70) zur Auswahl der Rückstellkurve ein Speicherelement enthält, das geeignet ist, die Konfiguration beizubehalten, die die geeignete Rückstellkurve für die gesamte für die Erzeugung und Erfassung eines Bildes notwendige Zeit, d.h. für die Zeit der Integration und des Lesens, oder ein Vielfaches davon, auswählt.

8. Elektro-optische Bilderfassungsvorrichtung (10) nach Anspruch 1, **dadurch gekennzeichnet, dass** die logischen Ports AND (33) und NOT (35) und die Schalter (34) rein digitaler Art in CMOS-Technologie sind.

9. Elektro-optische Bilderfassungsvorrichtung (10') nach Anspruch 3, **dadurch gekennzeichnet, dass** die lichterfassenden Unterblöcke (20) in Zeilen und Spalten angeordnet sind, um eine Matrixstruktur zu bilden, wobei jedem Rücksetzkurven-Erzeugungselement (30) einer Zeile eine andere Gruppe von Eingangsspannungssignalen (40) zugeordnet ist, wobei eine Struktur, die aus einer Vielzahl von Rücksetzkurven-Erzeugungselementen (30) besteht, zeilenweise wiederholt wird und die verschiedenen Gruppen von Eingangsspannungssignalen (40) den Rücksetzkurven-Erzeugungselementen (30) jeder Zeile auf ähnliche Weise zugeordnet sind.

## Revendications

1. Dispositif électro-optique d'acquisition d'images (10) comprenant:
- une pluralité de sous-blocs de détection de la lumière (20), chacun comprenant au moins un élément photosensible (80) qui inclut un élément photodétecteur pour la conversion de l'information lumineuse en un signal électrique et des supports électroniques contrôlables par des signaux de réinitialisation et capables de réinitialiser le photodétecteur concerné ;
- un bloc de lecture du signal détecté (60) destiné à lire le signal de sortie des éléments photosensibles (80);
- des éléments de sélection de ligne et de colonne, qui permettent d'accéder à différents éléments photosensibles (80) du dispositif et de les lire au moyen dudit bloc de lecture du signal détecté (60); et
- des circuits de contrôle de la décharge des pixels;
lesdits circuits de commande de décharge de pixels sont configurés de manière à combiner plusieurs signaux de tension d'entrée (40) pour générer au moins une courbe de réinitialisation, qui est transportée vers un ou plusieurs des sous-blocs de détection de la lumière (20) par au moins une ligne de distribution de la courbe de réinitialisation (13),
**caractérisé en ce que** lesdits circuits de commande de décharge de pixels comprennent:
- des éléments de génération de courbes de réinitialisation (30) conçus pour combiner lesdits signaux de tension d'entrée (40) afin de générer un nombre défini de courbes de réinitialisation,
- au moins un bloc de commande (50) apte à générer une séquence appropriée de signaux utiles aux éléments de génération de courbes de réinitialisation (30) pour générer et propager les courbes de réinitialisation à l'intérieur du dispositif (10) d'une manière appropriée;
chacun de ces éléments de génération de courbes de réinitialisation (30) comprenant:
- des ports ET (33) qui pilotent des interrupteurs (34) présents sur les lignes de transport des signaux de tension (16) et qui connectent exclusivement lesdits signaux de tension d'entrée (40) à une ligne de distribution de la courbe de réinitialisation (13) sortant de l'élément de génération de la courbe de réinitialisation (30):
- des ports NON (35) pour générer un signal négatif (36) à partir du signal des lignes de commande de signal (12), de sorte que le signal des lignes de commande de signal (12) et le signal négatif correspondant (36) constituent l'entrée desdits ports ET (33).

2. Dispositif électro-optique d'acquisition d'images (10) selon la revendication 1 **caractérisé en ce que** lesdits circuits de commande de décharge de pixels sont conçus pour générer une pluralité de courbes de réinitialisation et pour sélectionner dynamiquement, pour chacun desdits sous-blocs de détection de lumière (20), une courbe de réinitialisation appropriée parmi celles disponibles transportées par lesdites lignes de distribution des courbes de réinitialisation (13) tout en stockant cette sélection jusqu'à la sélection suivante.

3. Dispositif électro-optique selon la revendication 2 **caractérisé en ce qu'**au moins un desdits sous-blocs de détection de lumière (20) comprend un circuit de sélection de courbe de réinitialisation (70) associé à une pluralité d'éléments photosensibles (80).

4. Dispositif électro-optique d'acquisition d'images (10) selon la revendication 2 **caractérisé en ce que** lesdits circuits de commande de décharge de pixels comprennent:
- des circuits de sélection de courbe de réinitialisation (70), chacun associé à au moins un desdits éléments photosensibles (80) de manière à former un sous-bloc de détection de lumière (20), lesdits circuits de sélection de courbe de réinitialisation (70) étant configurés pour sélectionner, parmi une pluralité de courbes de réinitialisation reçues par l'intermédiaire d'une pluralité correspondante de lignes de distribution de courbe de réinitialisation (13), une courbe de réinitialisation appropriée parmi celles disponibles portées par lesdites lignes de distribution de courbe de réinitialisation (13) tout en stockant cette sélection jusqu'à une sélection ultérieure;
- au moins un bloc de commande (50) apte à générer une séquence appropriée de signaux utiles aux éléments de génération de courbes de réinitialisation (30) pour sélectionner une courbe de réinitialisation appropriée parmi celles disponibles transportées par lesdites lignes de distribution de courbes de réinitialisation (13).

5. Dispositif électro-optique d'acquisition d'images (10) selon la revendication 1 **caractérisé en ce que** ledit circuit de commande de décharge de pixels comprend des éléments de génération des courbes de réinitialisation (30') conçus pour la propagation sélective en succession de diverses courbes de réinitialisation ligne par ligne au fil du temps, de manière à garantir une réponse dynamique élevée même en cas de fonctionnement incontrôlé de la lumière.

6. Dispositif électro-optique d'acquisition d'images (10) selon la revendication 1 **caractérisé en ce que** chacun desdits éléments de génération des courbes de remise à zéro (30') comporte des bascules (37) destinées à recevoir des signaux de commande portés par lesdites lignes de commande de signaux (12) et un signal d'horloge (39) pour générer des signaux de commande desdits ports ET (33), de manière à permettre, outre la génération du signal négativé, le défilement d'une signature le long des sous-blocs de détection de la lumière (20) à chaque cycle d'horloge (39).

7. Dispositif électro-optique d'acquisition d'images (10) selon la revendication précédente **caractérisé en ce que** chacun de ces circuits de sélection de la courbe de réinitialisation (70) a une structure analogue à celle des éléments de génération des courbes de réinitialisation (30'), cette structure étant utilisée dans le sous-bloc sensible à la lumière (20) pour sélectionner la courbe de réinitialisation appropriée parmi celles transmises par les lignes de distribution des courbes de réinitialisation (13) associées au sous-bloc (20) lui-même, ledit circuit de sélection de la courbe de réinitialisation (70) comprend un élément de mémoire apte à maintenir la configuration qui sélectionne la courbe de réinitialisation appropriée pendant tout le temps nécessaire à la génération et à l'acquisition d'une image, c'est-à-dire pendant le temps d'intégration et de lecture, ou un multiple de celui-ci.

8. Dispositif électro-optique d'acquisition d'images (10) selon la revendication 1 **caractérisé en ce que** lesdits ports logiques ET (33) et NON (35) et lesdits commutateurs (34) sont de type purement numérique, en technologie CMOS.

9. Dispositif électro-optique d'acquisition d'images (10') selon la revendication 3 **caractérisé en ce que** lesdits sous-blocs de détection de lumière (20) sont disposés en lignes et en colonnes pour former une structure matricielle, un groupe différent de signaux de tension d'entrée (40) étant associé à chaque élément de génération de courbe de réinitialisation (30) d'une ligne, une structure constituée d'une pluralité d'éléments de génération de courbe de réinitialisation (30) étant répétée ligne par ligne et les divers groupes de signaux de tension d'entrée (40) étant associés de manière similaire aux éléments de génération de courbe de réinitialisation (30) de chaque ligne.
